# EUROPEAN PATENT APPLICATION

(11) **EP 4 362 567 A1**
(43) Date of publication of application: **01.05.2024**
(21) Application number: 23199477.3
(22) Date of filing: 25.09.2023
(51) Int. Cl.: H04W 56/00, H04B 1/74, H04L 1/22

(54) **RADIO FREQUENCY (RF) COMMUNICATIONS SYSTEM HAVING RF NODES THAT REACQUIRE SYNCHRONIZATION LOCK ON SPATIALLY DIVERSE, REDUNDANT DATA CHANNELS**

(30) Priority: 31.10.2022 US 202218051039
(71) Applicant: L3Harris Technologies, Inc., Melbourne, FL 32919 (US)
(72) Inventor: KENNEY, Brent A., Bountiful, 84010 (US); BENCH, Jeffrey B., Lehi, 84043 (US); PADILLA, Marc A., Farmington, 84025 (US); YASKOFF, Nicholas T., Park City, 84098 (US)
(74) Representative: Schmidt, Steffen J.

(57) **Abstract**

A radio frequency (RF) communications system **220** may include a first RF node **222** that transmits redundant data channels **242** on different RF spatial paths **242a,242b** and transmits a control channel **244** for synchronization lock with at least one other RF node. A second RF node **232** may receive the redundant data channels **242** on the plurality of respective different RF spatial paths **242a,242b** that are subject to RF disruption so that a disrupted redundant data channel loses synchronization lock. The second node **232** may reacquire synchronization lock for the disrupted redundant data channel **242a,242b** based upon data within another redundant data channel and in a shorter time than reacquiring synchronization lock using the control channel **244.**

## Description

### Field of the Invention

The present invention relates to the field of communication systems, and, more particularly, to a radio frequency (RF) communications system having RF nodes that transmit redundant data channels and related methods.

### Background of the Invention

Some modern waveforms used in communication systems, such as the Advanced Tactical Data Link (ATDL) waveform, may use frequency diversity to address frequency selective loss or signal interference in the communications link. For example, two copies of the data channel may be transmitted from an RF node that is configured to transmit RF signals at different frequencies, and both RF signals are received at another RF node as a receiver in a point-to-point communications link or mesh network. Fast fading or abrupt interference may cause one of the data channels to lose synchronization lock, but the communications link may be uninterrupted due to the transmission of the redundant data channel in the communications link.

Due to the nature of the data channel, synchronization cannot be re-established quickly, and the data channel that lost its synchronization lock must wait for the acquisition information to be transmitted on a control channel before re-establishing the communications link by acquiring a synchronization lock using that control channel. The delay for receiving the acquisition information on the control channel may be on the order of seconds, for example, because the control channel may also operate as a contention control channel. It is possible for the acquisition information to be contained in the redundant data channels without a control channel. In this configuration, the period of the acquisition information is also on the order of seconds. The acquisition information interrupts the data in this case, so it must be kept to a minimum. During the interim between acquisition information, where one of the data channels has lost synchronization lock, there is no redundancy in the communications link, and if the other RF signal at the other frequency has communication errors, data may be lost.

In a communications system using ATDL and similar waveforms, spatial diversity may also be employed to mitigate losses due to platform or antenna gain pattern blockages. For example, two copies of the data channel may be transmitted from different antennas at one RF node, such as an aircraft. The two copies of the data channel are both received at another RF node, which could be another aircraft, ground-based receiver, a satellite or other RF node as non-limiting examples.

However, one of the transmit antennas may be blocked in its communications, such as when an aircraft performs a complex maneuver or changes direction. The communications link is still uninterrupted due to the redundancy in the data channels. As in the case with a frequency diversity communications link, however, the data channel that lost the synchronization lock must wait for the acquisition information to be transmitted on the control channel before reestablishing the communications link. This delay to wait for the reacquisition information may be more than one second as noted before, and during the interim, there is no redundancy for the communications link, and further communications data may be lost when the other signal has interference. A fast reacquisition may be desirable in these scenarios, where one of the redundant data channels loses synchronization lock.

### Summary of the Invention

In general, a radio frequency (RF) communications system may comprise a first RF node configured to transmit redundant data channels on a plurality of respective different RF spatial paths, and also configured to transmit a control channel for synchronization lock with at least one other RF node. A second RF node may be configured to receive the redundant data channels on the plurality of respective different RF spatial paths and being subject to RF disruption so that a disrupted redundant data channel loses synchronization lock, and reacquire synchronization lock for the disrupted redundant data channel based upon data within another redundant data channel and in a shorter time than reacquiring synchronization lock using the control channel.

Each redundant data channel may comprise a plurality of header blocks and a respective data block following each header block. Each redundant data channel may comprise a respective synchronization field associated with each header block; and wherein the second RF node uses at least one synchronization field to reacquire synchronization lock. The control channel may comprise an acquisition block for acquiring synchronization repeating at a rate slower than a transmission rate of the respective synchronization field associated with each header block.

Each redundant data channel may comprise state and timing data for another redundant data channel. The control channel may operate as a contention control channel.

In some embodiments, the at least one other RF node may define a mesh network. In other embodiments, the first and second RF nodes may define a point-to-point communication link. Each RF node may comprise a respective RF antenna for each different RF spatial path.

In another embodiment, a radio frequency (RF) communications system may comprise a first RF node configured to transmit redundant data channels on a plurality of respective different RF spatial paths. Each redundant data channel may comprise a plurality of header blocks occurring at a first frequency. Each header block may have a synchronization field associated therewith, and an acquisition block occurring at a second frequency less than the first frequency. A second RF node may be configured to receive the redundant data channels on the plurality of respective different RF spatial paths and being subject to RF disruption so that a disrupted redundant data channel loses synchronization lock, and reacquire synchronization lock for the disrupted redundant data channel based upon the synchronization field in another redundant data channel and in a shorter time than reacquiring synchronization lock using the acquisition block.

Another aspect is directed to a method of radio frequency (RF) communications that may comprise operating a first RF node to transmit redundant data channels on a plurality of respective different RF spatial paths, and also to transmit a control channel containing an acquisition block in an example for synchronization lock with at least one other RF node. The method includes operating a second RF node to receive the redundant data channels on the plurality of respective different RF spatial paths and being subject to RF disruption so that a disrupted redundant data channel loses synchronization lock, and reacquire synchronization lock for the disrupted redundant data channel based upon data within another redundant data channel and in a shorter time than reacquiring synchronization lock using the control channel.

### Brief Description of the Drawings

Other features and advantages of the present invention will become apparent from the detailed description of the embodiments which follow, when considered in light of the accompanying drawings in which:
FIG. 1 is a high-level block diagram of the RF communications system showing RF nodes that reacquire synchronization lock on frequency diverse, redundant data channels in accordance with a non-limiting example.
FIG. 2 is a time versus rate plot of a data channel and control channel used in the RF communications system of FIG. 1 or FIG. 6.
FIG. 3 is a schematic diagram showing redundant data channels and reacquisition of synchronization lock on a disrupted redundant data channel that lost synchronization lock.
FIG. 4 is for another schematic diagram similar to FIG. 3, but showing loss of synchronization lock on both data channels and reacquisition of the synchronization lock on one of the data channels.
FIG. 5 is a high-level flowchart showing an example of RF communications using the RF communication system of FIG. 1.
FIG. 6 is another high-level block diagram of the RF communications system showing RF nodes that reacquire synchronization lock on redundant data channels having different RF spatial paths in accordance with a non-limiting example.
FIG. 7 is a time versus rate plot of a data channel and control channel that may be used in the RF communications system of FIG. 1 or FIG. 6.
FIG. 8 is a high-level flowchart showing an example of RF communications using the RF communications system of FIG. 6.

### Detailed Description

The present description is made with reference to the accompanying drawings, in which exemplary embodiments are shown. However, many different embodiments may be used, and thus, the description should not be construed as limited to the particular embodiments set forth herein. Rather, these embodiments are provided so that this disclosure will be thorough and complete. Like numbers refer to like elements throughout.

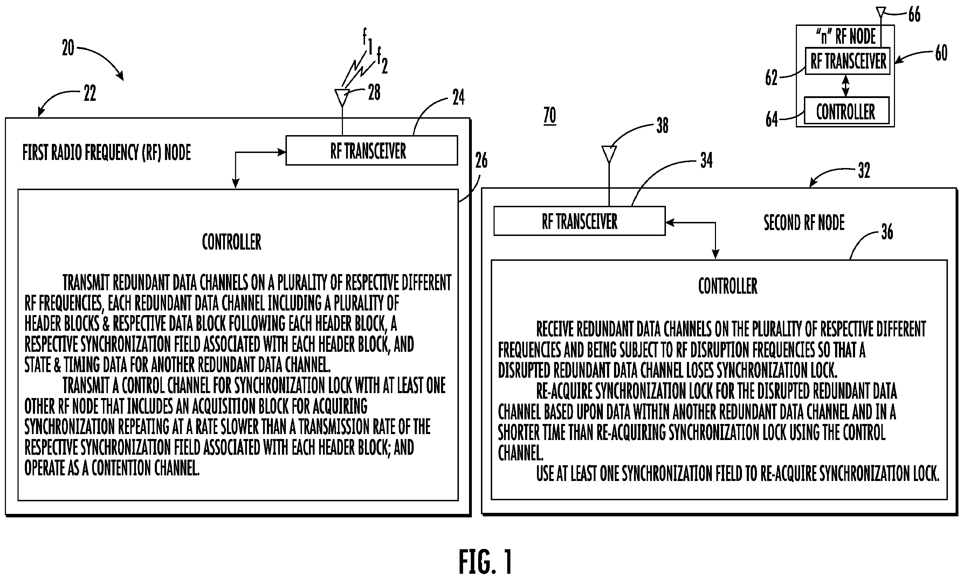

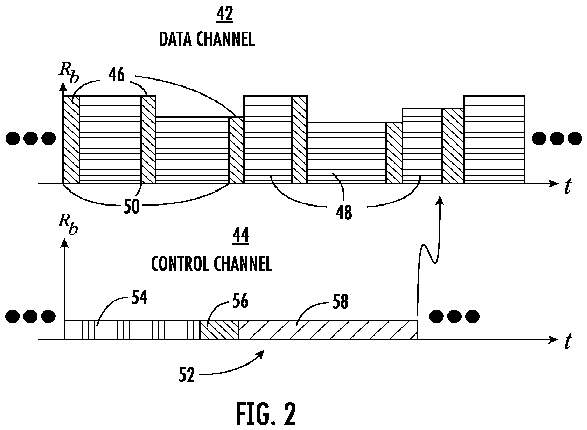

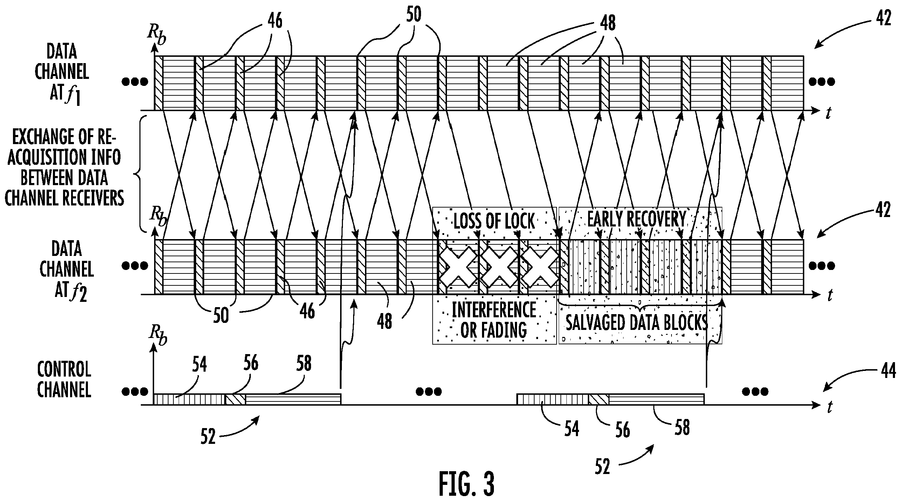

Referring initially to FIG. 1, a radio frequency (RF) communications system is illustrated generally at **20,** and shows a first RF node **22** that includes a first RF transceiver **24** and a first controller **26** coupled thereto. This first RF node **22** is configured to transmit redundant data channels **42** (FIG. 3) on a plurality of different RF frequencies as illustrated by the two RF signals designated f1 and f2 generated from the first RF transceiver **24** and first antenna **28** coupled thereto. The first RF node **22** is also configured to transmit a control channel **44** (FIGS. 2 and 3) for synchronization lock with at least one other RF node, such as the illustrated second RF node **32,** which is configured to receive the redundant data channels on the plurality of respective different frequencies.

The second RF node **32** includes a second RF transceiver **34** and a second controller **36** connected thereto and a second antenna **38.** This second RF node **32** is subject to RF disruption so that a disrupted redundant data channel **42** loses synchronization lock, but may reacquire a synchronization lock for that disrupted redundant data channel based upon data within another redundant data channel, and within a shorter time period, than reacquiring synchronization lock using a control channel **44.** Each of the first and second RF transceivers **24,34** may include multiple RF circuits for generating, receiving and processing RF signals at different frequencies, such as the illustrated f1 and f2.

As shown in the schematic diagram of the data channel **42** and control channel **44** in FIG. 2, each redundant data channel **42** includes a plurality of header blocks **46** and respective data blocks **48,** each having a data payload and a respective data block following each header block. A respective synchronization field **50** is associated with each header block **46.** The second RF node **32** uses at least one synchronization field **50** to reacquire synchronization lock. In an example, the start time of the synchronization field comes from the information tracked by the unblocked data channel.

For example, each redundant data channel **42** includes the header blocks **46,** each having the synchronization field **50.** State and timing information are not included in the synchronization fields. The synchronization field is used by a correlator to identify the start of the header. State and timing data come from the receiver of the unblocked data channel. The control channel **44** may be a contention control channel, and thus, for that reason, requires some off-time. The data for reacquiring synchronization lock in the control channel **44** is transmitted infrequently, on the order of seconds, and thus, requires that off-time.

The control channel **44** as shown in FIG. 2 includes an acquisition block **52** having a preamble **54,** a header **56,** and acquisition data **58.** This acquisition block **52** includes information and data for acquiring synchronization of a redundant data channel **42** or reacquiring synchronization of a redundant data channel that has lost synchronization lock, and repeats at a rate slower than a transmission rate of the respective synchronization field **50** associated with each header block **46.** In this example, the first and second RF nodes **22,32** may define a point-to-point communication link. It is also possible that at least one other RF node **60** shown as RF node "n" also having an "n" RF transceiver **62,** controller **64,** and antenna **66,** which forms a mesh network as illustrated generally at **70.**

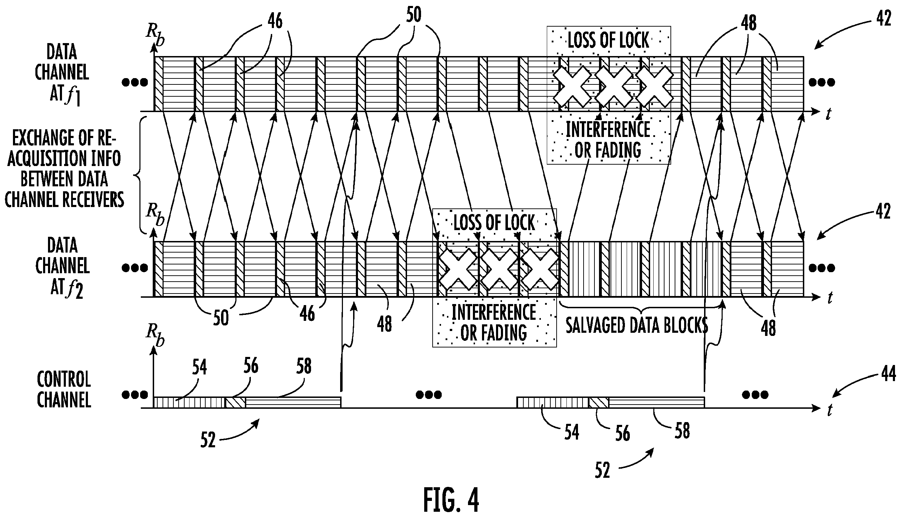

Referring now to FIGS. 3 and 4, there are illustrated schematic diagrams showing the reacquisition of synchronization lock for a disrupted redundant data channel based upon data within another redundant data channel. As illustrated, a first data channel **42** is transmitted at a first frequency f1 and a second data channel **42** at a second frequency f2. The control channel **44** is shown at the bottom of the second data channel operating at f2.

The reacquisition information is exchanged between different receiver circuits that may be part of the second RF transceiver **34** at the second RF node **32,** such as in the first example of FIG. 3. This example of FIG. 3 shows the loss of synchronization lock due to interference or fading of the second data channel **42** at the second frequency f2, but includes a fast recovery of this second data channel because there is no threat of losing data due to the frequency diversity redundancy and an early recovery with the salvaged data blocks.

The diagrams in FIGS. 3 and 4 are not drawn to scale. In the schematic diagrams of FIGS. 3 and 4, the acquisition block **52** has the arrows pointing to the location in the data channel **42** at which the particular header block **46** is located. Using this information, it is easy to see that the second data channel **42** at f2 can recover its synchronization using the header information **50** from the first data channel **42** at f1 before (or at a faster time interval) than the control channel **44** can send another acquisition block **52.**

The header block **46** in each data channel **42** includes information about the length of its payload as a data block **48** following each header block. As shown in the example of FIG. 3, the interference or fading occurs on the second data channel **42** operating at f2. After the interference or fading has passed, the second RF transceiver **32,** as an example, determines from the first data channel **42** operating at f1 and its synchronization field **50** the information required to permit the second RF node **32** to reacquire synchronization lock on the second data channel **42** at f2, from that information received from the first data channel **42** at f1. This allows early recovery of data as shown by the section in FIG. 3 entitled "Salvaged Data Block" because of the reacquisition of synchronization lock.

The data in the respective synchronization field **50** associated with each header block **46** for a data channel **42** operates at the first frequency f1, and in an example, is a short field that allows a reacquiring receiver to find the beginning of the header block, assuming that the receiver obtained the reacquisition data either from the other data channel receiver or the control channel. Besides the timing of the next header block, part of the acquisition information that is required is the center frequency of the data channel that lost lock. In the time sequence illustrated in FIGS. 3 and 4, the acquisition block **52** on the control channel **44** arrives later.

In the schematic diagram of FIG. 3, the salvaged data blocks are illustrated since the information in the acquisition block **52** from the control channel **44** has not yet arrived, and thus, the second RF node **32** would not be able to use any information from the control channel **44.** The control channel **44** is still important in these cases, however, when new RF nodes want to enter the mesh network **70** formed by multiple RF nodes. Synchronization lock is required for any new RF nodes to enter the mesh network **70** and communicate with other RF nodes in the mesh network.

The RF communications system **20** may provide frequency agility. Channel center frequencies for the data channels **42** may be changed dynamically without waiting for an acquisition block **52** on the control channel **44.** If one of the redundant data channels **42** misses the message to change frequency due to loss of synchronization lock, it would normally have to wait until the next acquisition block **52** in the control channel **44.** This is not necessary since frequency information is processed within receiver circuits of the second RF transceiver **34** at the second RF node **32,** and those receiver circuits process the data from redundant data channels **42** at the respective different frequencies such as f1 and f2.

The schematic diagram of FIG. 4 shows an example of the same two data channels **42** of FIG. 3 operating at separate frequencies f1 and f2, where the interference or fading causes loss of synchronization lock on both the first and second data channels. In this example, the first and second data channels **42** both lose information and synchronization lock, and if the acquisition block **52** on the control channel **44** was used for synchronization lock, then there would be complete loss of data. The RF communications system **20,** however, includes the redundant data channels **42** having the synchronization field **50** associated with each header block **46.** Each data receiver tracks information for the other receiver, including frequency, and provides it prior to each header. It is thus possible to reacquire the synchronization lock for both data channels **42** as shown in the schematic diagram of FIG. 4. The salvaged data blocks are illustrated.

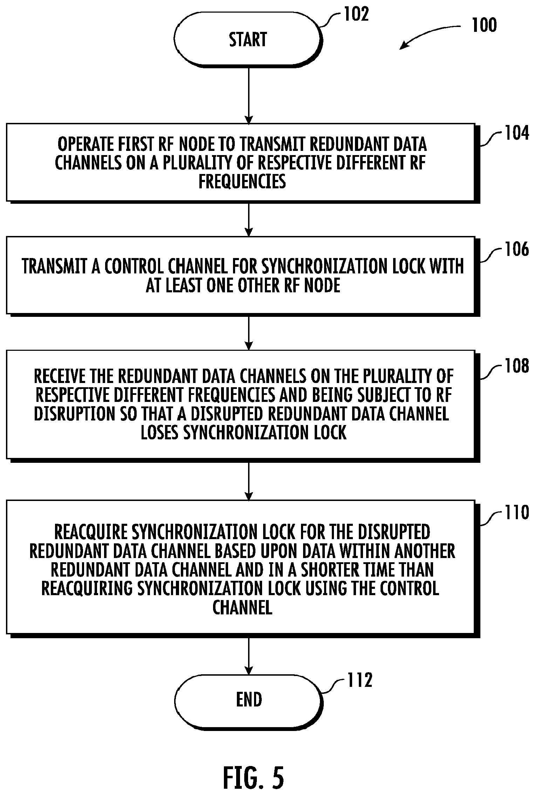

Referring now to FIG. 5, a high-level flowchart is illustrated at **100** and shows a method of RF communications using the RF communications system **20** illustrated in FIG. 1. The process starts (Block **102**) and the first RF node **22** transmits redundant data channels **42** on a plurality of respective different RF frequencies (f1 and f2) (Block **104**). This first RF node **22** also transmits a control channel **44** for synchronization lock with at least one other RF node, such as the second RF node **32** (Block **106**).

The second RF node **32** receives the redundant data channels **42** on the respective different frequencies f1 and f2. The redundant channels **42** are subject to RF disruption at the second RF node **32** so that a disrupted redundant data channel loses synchronization lock (Block **108**). The second RF node **32** also reacquires synchronization lock for the disrupted redundant data channel **42** based upon the data within another redundant data channel and in a shorter time than reacquiring synchronization lock using the control channel **44** (Block **110**). The process ends (Block **112**).

The RF communications system **20** as described is applicable with frequency diverse communications systems, such as a communications system that employs the Advanced Tactical Data Link (ATDL) waveform and incorporates a control channel **44** where there are relatively infrequent acquisition signals. The RF communications system may be used in a time division duplex (TDD) fashion, where all RF nodes transmit at the same center frequency but in bursts at different times. Alternatively, the RF communications system may be used in a frequency division duplex (FDD) fashion, where the transmitter and receiver operate continuously using non-overlapping frequency bands.

The data blocks **48** transmitted within the different data channels **42** each include the respective adjacent synchronization fields **50** and header blocks **46** that predict the timing of the next header.

Some candidate waveforms that could be incorporated for use with the communications system **20** do not require spreading, but could incorporate an unspread signal instead, such as quadrature phase shift keyed (QPSK) signal. Also, the RF communications system **20** does not have to incorporate TRANSEC (Transmission Security), nor maintain frequency agility, but could use different spatially diverse systems. When incorporating frequency and spatial diversity, the RF communications system **20** is applicable for use with the ATDL Standard. Both spreading and frequency hopping are possible operational modes and are forms of TRANSEC.

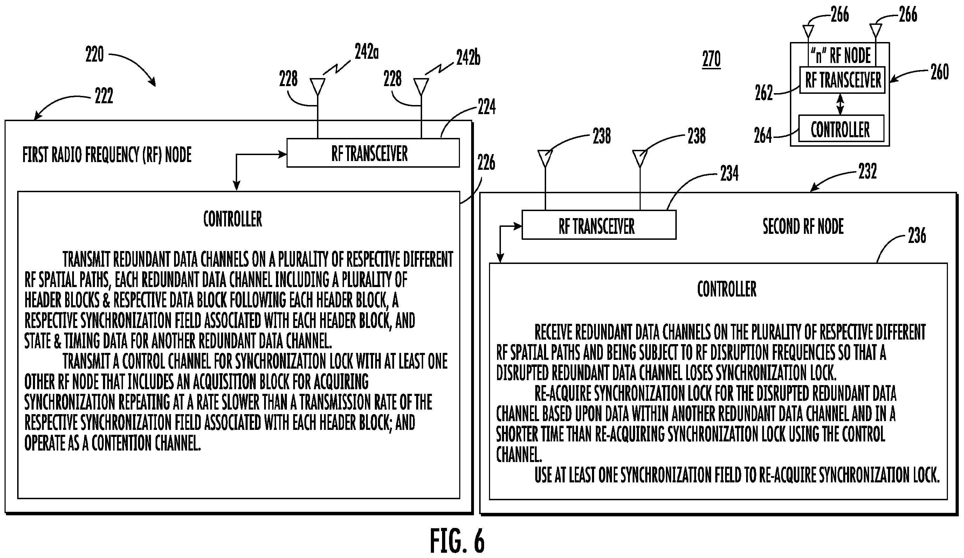

The RF communications system **20** as described may incorporate point-to-point communication links, e.g., two aircraft using frequency diversity, or as in the example described relative to FIG. 6, use spatial diversity and different RF spatial paths for redundant data channels and different antennas located on different sections of an airframe, for example. The redundant data channels may be multiplexed in some way to be received by another RF node. For example, the transmitting node may use one or a combination of the following multiple access schemes: code division (e.g., ATDL), frequency division (optional with ATDL), and time division. Different waveforms may be applied, and in a non-limiting example, the ATDL waveform is used with the RF communications system **20** and is described below in detail.

The ATDL waveform is a dynamic CDMA-based waveform that is applicable especially in a mesh network **70** as shown in the RF communications system **20** of FIG. 1, and also described below with reference to the RF communications system **220** of FIG. 6, using different RF spatial paths. The ATDL waveform incorporates one or more control channels **44** and one or more data channels **42,** where there is an option for two redundant data channels transmitted at first and second frequencies in the example shown in FIGS. 3 and 4.

The control channel **44** operates at a low data rate and low power, and it provides the necessary information to acquire the data channel **42,** which some skilled in the art also refer to as the traffic channel. The data channel **42** may operate at the same or at a different center frequency from the control channel **44.** The ATDL waveform standard allows for redundant data signals to be transmitted as separate data channels **42** for transmit-side diversity on different RF frequencies. The redundant data signals may also be transmitted by separate antennas for the respective different RF spatial paths as shown in the RF communications system **220** of FIG. 6. As noted before, the redundant data signals as separate data channels **42** may be transmitted at different center frequencies.

The control channel **44** carries the acquisition block **52** for allowing an RF node to acquire synchronization semi-periodically, and in the examples of the RF communications system **20** of FIG. 1, repeating at a rate slower than a transmission rate of the respective synchronization field **50** associated with each header block **46.** The period of the acquisition block **52** may be on the order of seconds.

The control channel **44** is shown schematically at FIGS. 2-4 and carries the transmitted acquisition block **52** having the preamble **54,** header **56,** and an acquisition data **58.** The preamble **54** is a sequence that can be readily detected by an RF node, e.g., the second RF transceiver **34** at the second RF node **34** in FIG. 1. The header **56** identifies the type of acquisition data **58** that will follow. For example, the acquisition data **58** contains information that the second RF transceiver **34** at the second RF node **32** or other RF node requires to transition to the data channel **42** such as the timing, the seed value for a pseudo-random spreading sequence, the frequency, the data rate, and the waveform modulation type (e.g., BPSK, QPSK, etc.). Each control channel acquisition data **58** provides this information for all active redundant data channels **42.**

In addition to the acquisition block **52** with its preamble **54,** header **56,** and acquisition data **58,** other data may be present on the control channel **44.** For example, the control channel **44** may operate as a contention control channel, and the low data rate of the control channel and the presence of other data are factors may lead to the relatively long acquisition block period.

Each data channel **42** as shown in the examples of FIGS. 2-4, includes the header block **46** and payload or data block **48.** Each header block **46** starts with its synchronization field **50.** The synchronization field **50** allows the second RF transceiver **34** at the second RF node **32** in this example to resolve timing offsets when the center frequency is changed or when the second RF transceiver **24** is trying to reacquire synchronization lock following a loss of synchronization lock in one of the data channels. The second RF transceiver **32** in this example at the second RF node **32** will either wait for the next acquisition block **52** on the control channel **44** to reestablish the communications link, or it can use information from a redundant data channel to regain synchronization lock as explained with reference to the RF communications system **20** of FIG. 1, for example.

The data channel **42** when incorporating the ATDL waveform is dynamic because several parameters can change on-the-fly. For example, the data channel **42** may change its center frequency, data rate, modulation type, and payload length. These waveform changes are signaled in the header blocks **46** that precede each payload, i.e., data block **48.** In order to keep the overhead associated with the header block **46** to a reasonable level, the waveform changes are generally specified relative to the previous data block **48** state.

The waveform state may be specified in absolute terms after an acquisition block **52** on the control channel **44.** Specifying the absolute state may be necessary for an RF transceiver that tries to enter the mesh network **70** and acquire the data channel **42** for the first time, or after losing synchronization lock, and the synchronization field **50** is not employed as part of the header block **46** in communications. Given the dynamic nature of the ATDL waveform, it is necessary for an RF node to properly detect each header block **46** in order to maintain synchronization lock. For example, if a header block **46** is not detected properly by an RF node, then that RF node may not know how to decode and detect the payload or data block **48** that follows. In addition, that RF node will not know the length of the data block **48,** so it will not know when the next header block **46** begins.

As a CDMA signal, the data channel **42** is spread in frequency using a sequence of chips. Each symbol is spread by a specific number of chips that will maintain the allocated bandwidth. Hence, lower data rate symbols may be spread with more chips than higher data rate symbols. The pseudo-random spreading sequence is long and known to all RF nodes in the mesh network **70,** but the position in that sequence is randomly selected by an RF transceiver, such as at the first RF node **22** that begins upon initialization.

If there are multiple traffic, i.e., data channels **42** being used for frequency and/or spatial diversity, each data channel may have a different starting point in the spreading sequence. This random sequence does not require RF nodes in the mesh network **70** to synchronize their transmission as is done for some hub-spoke topologies. Due to the length of the spreading sequence, any RF node initially must be signaled where to look in order to properly receive the signal. After acquiring the signal, the RF node can track the spreading sequence since it is known to all RF nodes.

Whether frequency or spatial diversity are used, the same header block **46** and payload or data block **48** are transmitted on the redundant data channels **42.** Due to this redundancy, the timing of the header block **46** and payload or data blocks **48** may be identical. The only information in the header block **46** that may be unique to a particular channel is the center frequency. However, the header block **46** may contain the center frequencies of all data channels **42** that are associated with a frequency change, which is the information that allows the RF nodes to track.

Referring now to FIG. 6, there is illustrated an RF communication system generally at **220** that shows its first RF node **222** configured to transmit redundant data channels **242** on a plurality of respective different RF spatial paths illustrated by the two signal paths **242a, 242b** generated from two separate antennas **228** at the first RF node. This RF communications system **200** uses spatial diversity, such as transmitting from the two different antenna **228** located on an aircraft or other RF node site, and may use spreading, or frequency diversity, or time diversity techniques to distinguish signals between different antennas.

This first RF node **222** is also configured to transmit a control channel such as the type shown in FIG. 2 for synchronization lock with at least one other RF node, such as the illustrated second RF node **232** or a third or "n" RF node 260. Each RF node **222, 232, 260** includes its respective RF transceiver **224, 234, 262** and controller **226, 236, 264** connected thereto.

For purposes of illustration, the RF communications **220** system shown in FIG. 6 is described with reference numerals beginning in the 200 series with the reference numerals following closely the reference numerals shown in FIG. 1 but in the 200 series. Because spatial diversity is used, each RF transceiver **224, 234, 262** includes at least two antennas **228, 238, 266,** such as in the example of an aircraft, and may be located on the top and bottom surfaces of the fuselage.

In this example, the second RF node **232** is configured to receive the redundant data channels **242a,242b** on the plurality of respective different spatial paths and is also subject to RF disruption, such as described with reference to FIG. 1, so that a disrupted redundant data channel **242a,242b** loses synchronization lock. The second RF node **232** may reacquire synchronization lock for the disrupted redundant data channel **242a,242b** based upon data within another redundant data channel and in a shorter time than reacquiring synchronization locks using the control channel **244.** Because a receiver also has two antennas, the data channels **242a,242b** as signals may be received on either of the receiver's antenna, depending on the RF blockages or interference.

Similar to the RF communications system **20** described with reference to FIG. 1, the RF communications system **220** uses spatial diversity, and each redundant data channel **242a,242b** includes a plurality of header blocks **246** and a respective data block **248** following each header block. Each redundant data channel **242** may include a respective synchronization field **250** associated with each header block **246.** The second RF node **232** uses at least one synchronization field **250** to reacquire synchronization lock along with the data provided from the data channel that still has synchronization lock.

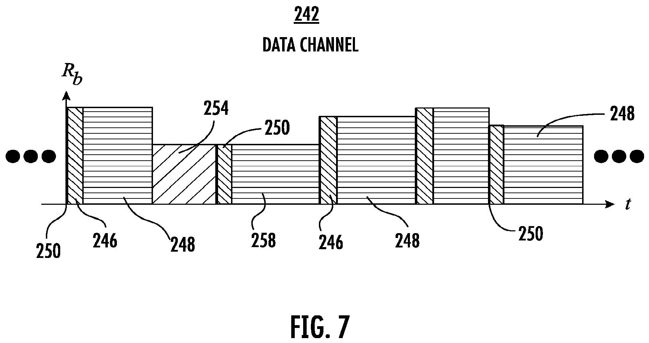

As shown in FIG. 7, the data channel **242** includes the header block **246,** data block as a payload **248,** a preamble **254,** and in this example, acquisition block as acquisition data **258.** As illustrated, a plurality of header blocks **246** occur at a first frequency. Each header block **246** includes a synchronization field **250** associated therewith.

The acquisition block **258** occurs at a second frequency less than the first frequency. The second RF node **232** as shown in FIG. 6 is configured to receive the redundant data channels **242a,242b** on the plurality of different RF spatial paths and are subject to RF disruption so that a disrupted redundant data channel loses synchronization lock. The second RF node **232** reacquires synchronization lock for the disrupted redundant data channel based upon the synchronization field **250** in another redundant data channel and in a shorter time than reacquiring synchronization lock using the acquisition block **258.** As noted before, each redundant data channel includes a respective data block **248.** The data channel **242** shown in FIG. 7 may be used with the described frequency diversity and spatial diversity systems.

When the control channel is used as in FIG. 2, the control channel includes an acquisition block for acquiring synchronization repeating at a rate slower than a transmission rate of the respective synchronization field associated with each header block. The RF nodes may define a mesh network **270** as shown in FIG. 6, including the "n" RF node **260** or define a point-to-point communication link. Each RF node **222, 232, 260** includes two respective RF antenna **228, 238, 266,** e.g., one for each different RF spatial path as shown in the block diagram of FIG. 6 in which two different antennas are illustrated for each RF node. Those of skill in the art will recognize that a single receive antenna may be used with a pair of transmit antennas and vice versa in other embodiments.

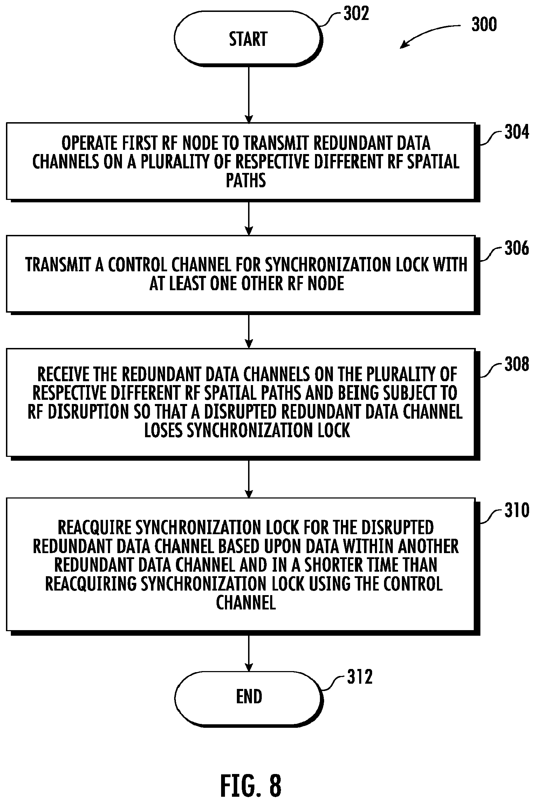

Referring now to FIG. 8, a high-level flowchart is illustrated at **300** and shows a method of RF communications using spatial diversity as in the RF communications system **220** shown in FIG. 6. The process starts (Block **302**) and the first RF node **222** transmits redundant data channels **242** on a plurality of respective different RF spatial paths **242a, 242b** (Block **304**). The first RF node **222** also transmits a control channel **244** for synchronization lock with at least one other RF node (Block **306**). A second RF node **232** receives the redundant data channels **242** on the plurality of respective different spatial paths **242a, 242b** and is subject to RF disruption so that a disrupted redundant data channel loses synchronization lock (Block **308**). The second RF node **232** reacquires synchronization lock for the disrupted redundant data channel **242** based upon data within another redundant data channel and in a shorter time than reacquiring synchronization lock using the control channel **244** (Block **310**). The process ends (Block **312**).

This application is related to copending patent application entitled, **"RADIO FREQUENCY (RF) COMMUNICATIONS SYSTEM HAVING RF NODES THAT REACQUIRE SYNCHRONIZATION LOCK ON FREQUENCY DIVERSE, REDUNDANT DATA CHANNELS,"** which is filed on the same date and by the same assignee and inventors, the disclosure which is hereby incorporated by reference.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A radio frequency (RF) communications system comprising:
a first RF node configured to transmit redundant data channels on a plurality of respective different RF spatial paths, and also configured to transmit a control channel for synchronization lock with at least one other RF node; and
a second RF node configured to
receive the redundant data channels on the plurality of respective different RF spatial paths and being subject to RF disruption so that a disrupted redundant data channel loses synchronization lock, and
reacquire synchronization lock for the disrupted redundant data channel based upon data within another redundant data channel and in a shorter time than reacquiring synchronization lock using the control channel.

2. The RF communications system of claim 1 wherein each redundant data channel comprises a plurality of header blocks and a respective data block following each header block.

3. The RF communications system of claim 2 wherein each redundant data channel comprises a respective synchronization field associated with each header block; and wherein the second RF node uses at least one synchronization field to reacquire synchronization lock.

4. The RF communications system of claim 3 wherein the control channel comprises an acquisition block for acquiring synchronization repeating at a rate slower than a transmission rate of the respective synchronization field associated with each header block.

5. The RF communications system of claim 1 further comprising at least one other RF node defining a mesh network.

6. The RF communications system of claim 1 wherein the first and second RF nodes define a point-to-point communication link.

7. A method of radio frequency (RF) communications comprising:
operating a first RF node to transmit redundant data channels on a plurality of respective different RF spatial paths, and also to transmit a control channel for synchronization lock with at least one other RF node; and
operating a second RF node to
receive the redundant data channels on the plurality of respective different RF spatial paths and being subject to RF disruption so that a disrupted redundant data channel loses synchronization lock, and
reacquire synchronization lock for the disrupted redundant data channel based upon data within another redundant data channel and in a shorter time than reacquiring synchronization lock using the control channel.

8. The method of claim 7 wherein each redundant data channel comprises a plurality of header blocks and a respective data block following each header block.

9. The method of claim 8 wherein each redundant data channel comprises a respective synchronization field associated with each header block; and wherein the second RF node uses at least one synchronization field to reacquire synchronization lock.

10. The method of claim 9 wherein the control channel comprises an acquisition block for acquiring synchronization repeating at a rate slower than a transmission rate of the respective synchronization field associated with each header block.
